# EUROPEAN PATENT APPLICATION

(11) **EP 4 748 520 A1**
(43) Date of publication of application: **27.05.2026**
(21) Application number: 24845200.5
(22) Date of filing: 31.05.2024
(51) Int. Cl.: B23B 15/00, B23B 3/30, B23B 31/00

(54) **WORKPIECE DETECTION DEVICE AND MACHINE TOOL**

(30) Priority: 21.07.2023 JP 2023118899
(71) Applicant: Citizen Machinery Co., Ltd., Nagano 389-0206 (JP)
(72) Inventor: KOTAKE, Kyota, Kitasaku-gun, Nagano 389-0206 (JP); SHIDA, Tadayasu, Kitasaku-gun, Nagano 389-0206 (JP)
(74) Representative: Louis Pöhlau Lohrentz
(86) International application number: PCT/JP2024/020032
(87) International publication number: WO 2025/022818

(57) **Abstract**

In order to detect a workpiece supplied to a spindle (presence or absence of a workpiece and a length of the workpiece) without using torque fluctuation of a servo-equipped actuator, a workpiece detection device (30) includes an ejector rod (22) that is disposed inside a rear spindle (20) that grips a workpiece (W) and that is movable so as to press the workpiece (W) and eject the workpiece (W) to outside; a servo motor (28) including a drive portion (28a) that moves the ejector rod (22) and an encoder (28b); and a control portion (60) that controls the drive portion (28a) based on a detection result of the encoder (28b). The control portion (60) moves the ejector rod (22) to a standby position. The encoder (28b) detects movement when the workpiece (W) moves the ejector rod (22). The control portion (60) calculates presence or absence of the workpiece (W) based on the movement.

## Description

### [Technical Field]

The present invention relates to a workpiece detection device and a machine tool.

### [Background Art]

A workpiece held by a front spindle is often transferred to a rear spindle, and machining is performed on the workpiece held by the rear spindle. In this case, it is required to confirm whether the workpiece is appropriately transferred from the front spindle to the rear spindle.

Accordingly, there has been proposed a device including a workpiece supplying portion that supplies a workpiece to a spindle, and a recognizing portion that recognizes an insertion length of the workpiece into the spindle based on a position of the workpiece supplying portion and a position of the spindle when the workpiece supplying portion supplies the workpiece to the spindle (see, for example, Patent Literature 1).

### [Prior Art Documents]

### [Patent Literature]

[Patent Literature 1] Japanese Patent Application Publication No.2009-166165

### [Summary of Invention]

### [Problem to be solved]

Specifically, the technique proposed in Patent Literature 1 recognizes the insertion length of the workpiece by detecting torque fluctuation of a servo-equipped actuator with the recognizing portion.

The present invention has been made in view of the above circumstances, and an object of the present invention is to provide a workpiece detection device and a machine tool including the workpiece detection device that can detect a workpiece supply state relative to a spindle (presence or absence of a workpiece and/or a length of the workpiece) with higher accuracy than when torque fluctuation of a servo-equipped actuator is used.

### [Solution to Problem]

A first aspect of the present invention is a workpiece detection device including a movable body disposed inside a spindle that is configured to grip a workpiece, the movable body being configured to be movable in an axial direction of the spindle to press the workpiece inserted inside the spindle and discharge the workpiece outside the spindle; a drive mechanism comprising a drive portion that is configured to move the movable body and a detection portion that is configured to detect movement of the drive portion; and a control portion that is configured to control the drive portion based on a detection result of the detection portion. The control portion is configured to cause the movable body to be moved to a predetermined position in advance before the workpiece is inserted into the spindle. The detection portion is configured to detect a movement length of the movable body when the workpiece is inserted into the spindle and the workpiece moves the movable body. The control portion is configured to calculate a length of the workpiece based on the movement length.

A second aspect of the present invention is a machine tool including a spindle that is configured to receive a workpiece and to grip the workpiece; a tool that is configured to machine the workpiece gripped by the spindle; a control device that is configured to control operations of the spindle and the tool; and the workpiece detection device according to the present invention. The control portion of the workpiece detection device is the control device.

### [Effects of Invention]

The workpiece detection device and the machine tool according to the present invention can detect a workpiece supply state relative to a spindle (presence or absence of a workpiece and/or a length of the workpiece) with higher accuracy than when torque fluctuation of a servo-equipped actuator is used.

### [Brief Description of Drawings]

[FIG. 1] FIG. 1 is a plan view schematically showing a main configuration of an automatic lathe.
[FIG. 2] FIG. 2 is a cross-sectional view taken along the vertical plane including an axis of a rear spindle of the automatic lathe, showing a state in which a front end surface of an ejector rod is moved to a standby position coincident with a front end surface of the rear spindle.
[FIG. 3] FIG. 3 is a cross-sectional view taken along the vertical plane including the axis of the rear spindle of the automatic lathe, showing a state in which the ejector rod is pushed by a workpiece and retracted (gripping position).
[FIG. 4] FIG. 4 is a cross-sectional view taken along the vertical plane including the axis of the rear spindle of the automatic lathe, showing a state in which the front end surface of the ejector rod is moved to a retracted position separated from an insertion-side end surface of the workpiece.
[FIG. 5] FIG. 5 is a block diagram showing configurations of a workpiece ejecting device and a workpiece detection device.
[FIG. 6] FIG. 6 is a schematic diagram showing an example in which an ejector rod stands by at a known predetermined position as a standby position.
[FIG. 7] FIG. 7 is a flowchart showing an example of an operation flow of the automatic lathe.
[FIG. 8] FIG. 8 is a cross-sectional view taken along the vertical plane including the axis of the rear spindle, showing a state in which a front end surface of a knockout jig is moved to the standby position protruding from the front end surface of the rear spindle.
[FIG. 9] FIG. 9 is a cross-sectional view taken along the vertical plane including the axis of the rear spindle, showing a state in which the knockout jig is pushed by the workpiece and retracted (gripping position).
[FIG. 10] FIG. 10 is a cross-sectional view taken along the vertical plane including the axis of the rear spindle, showing a state in which a front end surface of the ejector rod is moved to the retracted position separated from a rear end surface of a tip receiving portion of the knockout jig.

### [Detailed Description of Embodiments]

An embodiment of a workpiece detection device and a machine tool according to the present invention will be described with reference to the drawings.

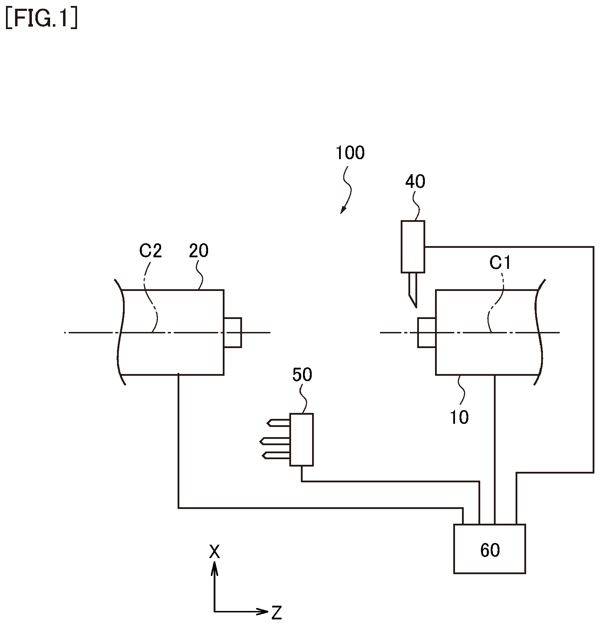

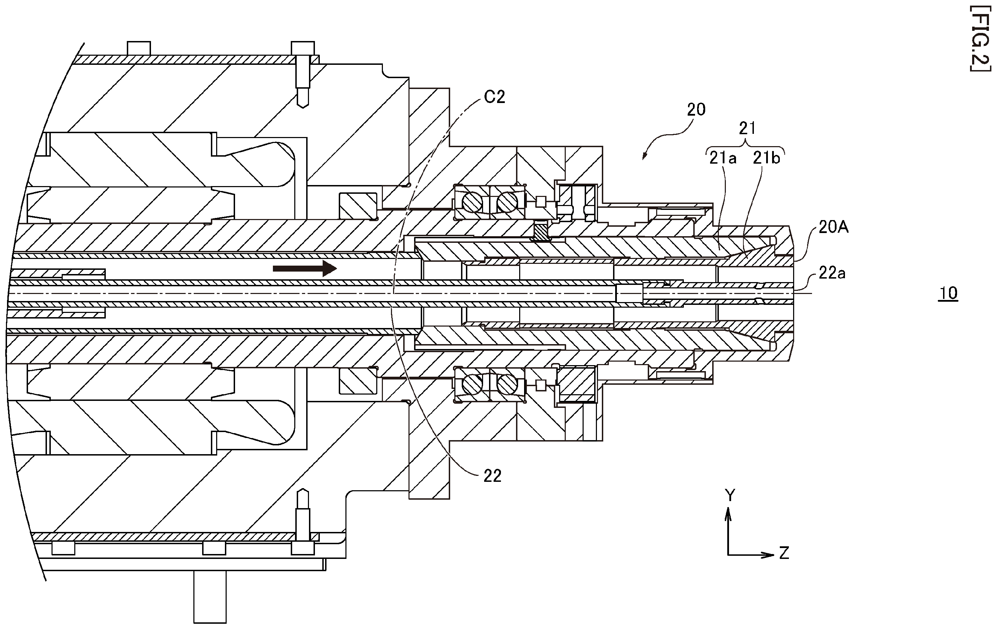

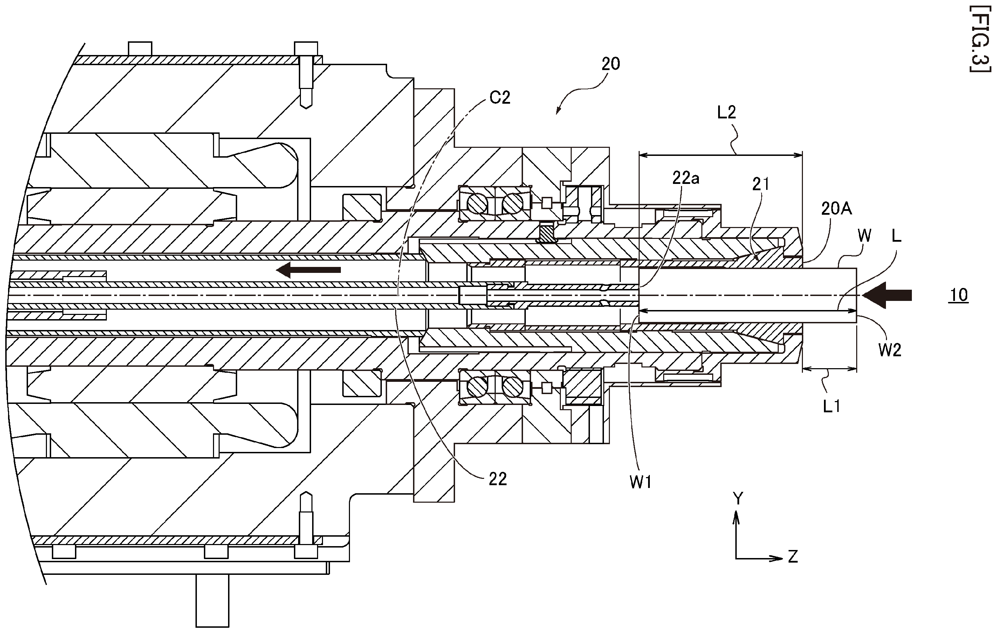

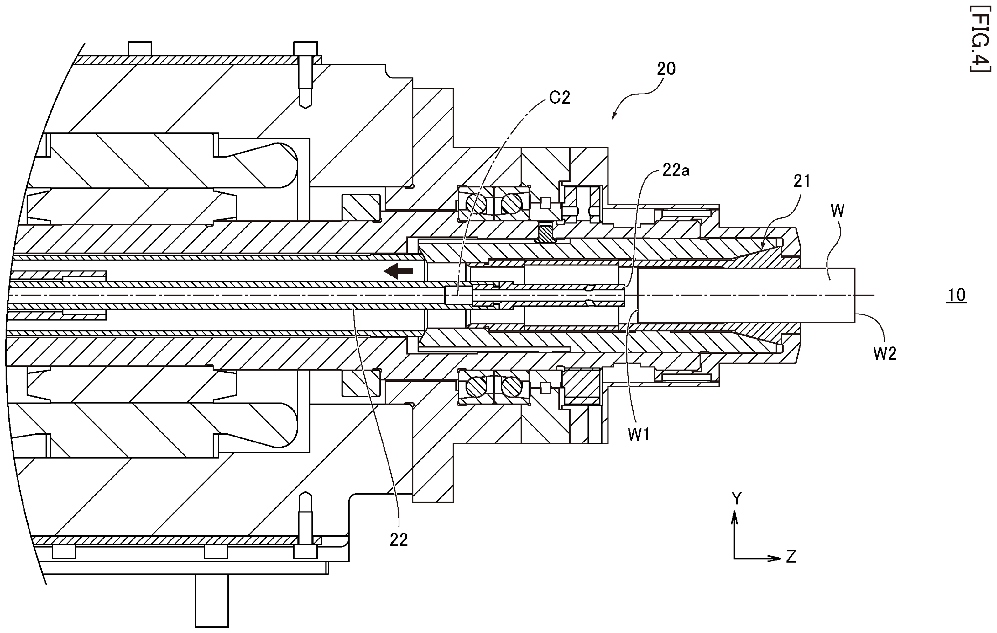

(Basic configuration of automatic lathe) FIG. 1 is a plan view schematically showing a main configuration of an automatic lathe 100. FIGS. 2, 3, and 4 are cross-sectional views taken along a vertical plane including an axis C2 of a rear spindle 20 of the automatic lathe 100. FIG. 2 shows a state in which a front end surface 22a of an ejector rod 22 is moved to a standby position coincident with a front end surface 20A of the rear spindle 20. FIG. 3 shows a state in which the ejector rod 22 is pushed by a workpiece W and retracted (gripping position). FIG. 4 shows a state in which the front end surface 22a of the ejector rod 22 is moved to a retracted position separated from an insertion-side end surface W1 of the workpiece W.

The automatic lathe 100 is one embodiment of the machine tool according to the present invention. As shown in FIG. 1, the automatic lathe 100 includes a front spindle 10, a rear spindle 20, a gang tool post 40, a rear tool post 50, and a control portion 60 (control device).

The front spindle 10 grips a workpiece W, which is a long bar-shaped member, and rotates the workpiece W about an axis C1. The front spindle 10 is fixed to a front headstock (not shown), and the front spindle 10 is movable along a z-axis by the front headstock moving in a z-axis direction parallel to the axis C1. The control portion 60 controls the movement of the front headstock in the z-axis direction.

The rear spindle 20 grips the workpiece W and rotates the workpiece W about an axis C2. The rear spindle 20 is disposed to face the front spindle 10. The axis C2 is parallel to the z-axis direction, similarly to the axis C1. The rear spindle 20 receives the workpiece W machined by the front spindle 10 from the front spindle 10 in a state in which the axis C2 is disposed coaxially with the axis C1 of the front spindle 10. The rear spindle 20 receives the workpiece W inserted therein, grips the inserted workpiece W, and rotates the gripped workpiece W about the axis C2.

The workpiece W transferred to the rear spindle 20 is cut by a cut-off tool provided on the gang tool post 40 at a position of a predetermined protruding length L1 from the front end surface 20A of the rear spindle 20, in a state in which the workpiece W is also gripped by the front spindle 10.

In the rear spindle 20, an outer peripheral surface of the workpiece W cut to the predetermined length and an end surface of the workpiece W facing the front spindle 10 (ejection-side end surface) are machined by tools provided on the gang tool post 40 and the rear tool post 50.

The rear spindle 20 is fixed to a rear headstock (not shown). The rear spindle 20 is movable in the z-axis direction by the rear headstock moving along the z-axis parallel to the axis C2. The rear spindle 20 is also movable in an x-axis direction by the rear headstock moving along an x-axis in a horizontal plane orthogonal to the z-axis. The control portion 60 controls the movement of the rear headstock in the z-axis direction and the x-axis direction.

The control portion 60 controls operations of the front spindle 10, the rear spindle 20, the gang tool post 40, the rear tool post 50, the front headstock, and the rear headstock.

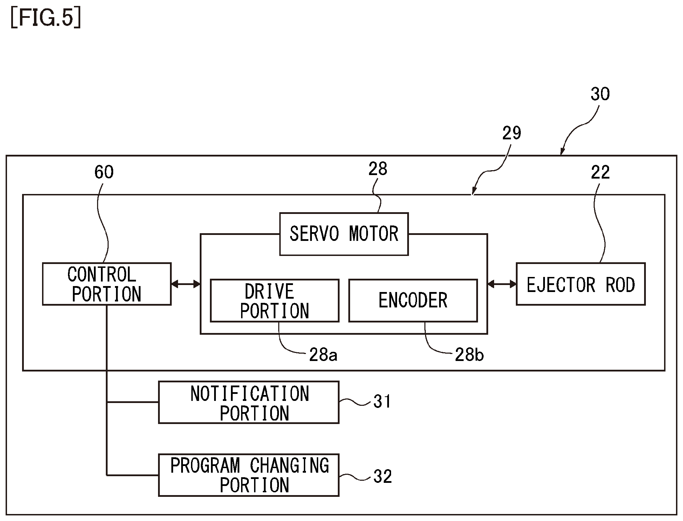

(Workpiece ejecting device) FIG. 5 is a block diagram showing configurations of a workpiece ejecting device 29 and a workpiece detection device 30. As shown in FIGS. 2 to 4, a workpiece W is inserted and supplied, along an inside extending along the axis C2, into the rear spindle 20 from the front spindle 10 disposed to face the rear spindle 20, as shown in FIGS. 3 and 4. Hereinafter, an end surface of the workpiece W that becomes a leading end when the workpiece W is inserted into the rear spindle 20 is referred to as an insertion-side end surface W1, and an end surface of the workpiece W that becomes a trailing end when the workpiece W is inserted into the rear spindle 20 is referred to as an ejection-side end surface W2. The ejection-side end surface W2 is an end surface closer to the front spindle 10 than the insertion-side end surface W1.

A collet chuck 21 is provided at a front end of the rear spindle 20 on a side closer to the front spindle 10. The collet chuck 21 includes a sleeve 21a and a collet 21b. Under control of the control portion 60, the sleeve 21a advances along the axis C2 toward the front end surface 20A of the rear spindle 20, thereby reducing an inner diameter of the collet 21b and gripping, by the collet chuck 21, the workpiece W inserted inside the collet 21b from an outer peripheral surface side.

The rear spindle 20 includes the workpiece ejecting device 29 shown in FIG. 5. The workpiece ejecting device 29 ejects the workpiece W gripped by the collet chuck 21 to the outside of the rear spindle 20 from the front end surface 20A. As shown in FIG. 5, the workpiece ejecting device 29 includes the control portion 60, a servo motor 28 (drive mechanism), and an ejector rod 22 (movable body). The servo motor 28 and the ejector rod 22 are provided on the rear spindle 20. The control portion 60 is provided on the automatic lathe 100 separately from the rear spindle 20.

As shown in FIGS. 2 to 4, the ejector rod 22 is disposed inside the rear spindle 20 along the axis C2. The ejector rod 22 is a rod-shaped member extending along the axis C2. The ejector rod 22 is provided to be linearly movable along the axis C2 between a retracted position shown in FIG. 4, in which the front end surface 22a is separated rearward from the insertion-side end surface W1 of the workpiece W gripped by the rear spindle 20, and an ejection position shown in FIG. 2, in which the front end surface 22a coincides with the front end surface 20A of the rear spindle 20.

Then, during movement of the ejector rod 22 from the retracted position (FIG. 4) toward the ejection position (FIG. 2), as shown in FIG. 3, the front end surface 22a comes into contact with the insertion-side end surface W1 of the workpiece W in a state in which machining in the rear spindle 20 has been completed and gripping by the collet chuck 21 has been released. In this contact state, the ejector rod 22 pushes the workpiece W toward the front end surface 20A of the rear spindle 20, and ejects the workpiece W to the outside of the rear spindle 20 during the movement of the ejector rod 22 until the ejector rod 22 reaches the ejection position shown in FIG. 2.

The ejector rod 22 does not rotate about the axis C2 while linearly moving from the retracted position to the ejection position.

The servo motor 28 includes a drive portion 28a that rotationally drives, and an encoder 28b (detection portion). The encoder 28b detects rotation of the drive portion 28a and also detects a rotation angle thereof. The control portion 60 controls the rotation of the drive portion 28a based on the rotation angle detected by the encoder 28b (detection result).

The drive portion 28a is connected to the ejector rod 22. By the control portion 60 rotating the drive portion 28a, the ejector rod 22 is linearly moved along the axis C2. Further, by the control portion 60 switching a rotation direction of the drive portion 28a between a forward rotation direction and a reverse rotation direction, advancement and retraction of the ejector rod 22 along the axis C2 are switched. Further, by the control portion 60 controlling the rotation angle of the drive portion 28a, a movement length of linear movement of the ejector rod 22 is adjusted.

(Workpiece detection device) The rear spindle 20 includes the workpiece detection device 30 shown in FIG. 5. The workpiece detection device 30 is one embodiment of the workpiece detection device according to the present invention. The workpiece detection device 30 detects presence or absence of the workpiece W supplied from the front spindle 10 to the rear spindle 20 and a length of the workpiece. The workpiece detection device 30 is configured by using the workpiece ejecting device 29.

The workpiece detection device 30 performs the detection of the presence or absence of the workpiece W and detection of a length of the workpiece W by using the ejector rod 22 and the servo motor 28 in the workpiece ejecting device 29, and by the control portion 60 controlling the servo motor 28 and the ejector rod 22.

The workpiece detection device 30 includes, in addition to the control portion 60, the servo motor 28, and the ejector rod 22, a notification portion 31 and a program changing portion 32. The notification portion 31 and the program changing portion 32 are controlled by the control portion 60.

As a configuration of the workpiece detection device 30, the control portion 60 controls driving of the servo motor 28 to advance the ejector rod 22 along the axis C2 toward the front end surface 20A of the rear spindle 20, prior to the rear spindle 20 receiving the workpiece W, and stops the ejector rod 22 at the ejection position (an example of a predetermined position) in which the front end surface 22a coincides with the front end surface 20A of the rear spindle 20 as shown in FIG. 2.

In a state in which the front end surface 22a of the ejector rod 22 is at the ejection position, the workpiece W is received from the front spindle 10. At this time, the collet chuck 21 of the rear spindle 20 is set to a released state under control of the control portion 60, and the insertion of the workpiece W into an inside of the collet chuck 21 is allowed.

The control portion 60 linearly moves at least one of the front headstock and the rear headstock along the z-axis so as to move the front spindle 10 relatively closer to the rear spindle 20. Accordingly, the workpiece W gripped by the front spindle 10 approaches the rear spindle 20, and thereafter, the workpiece W is inserted from the insertion-side end surface W1 into an inside of the collet chuck 21 of the rear spindle 20 along the axis C2 disposed coaxially with the axis C1.

When the workpiece W reaches the front end surface 20A of the rear spindle 20, the insertion-side end surface W1 of the workpiece W comes into contact with the front end surface 22a of the ejector rod 22. Then, as the workpiece W is inserted into the inside of the rear spindle 20, the workpiece W pushes the ejector rod 22 rearward along the axis C2 while the insertion-side end surface W1 of the workpiece W remains in contact with the front end surface 22a of the ejector rod 22, and the ejector rod 22 moves rearward.

Then, when the workpiece W is inserted to a predetermined position inside the rear spindle 20 for machining at the rear spindle 20, transfer of the workpiece W from the front spindle 10 to the rear spindle 20 is completed, and the workpiece W stops at a position shown in FIG. 3.

The control portion 60 controls the collet chuck 21 at a position where the workpiece W has stopped, and causes the collet chuck 21 to grip the workpiece W. A position of the ejector rod 22 shown in FIG. 3, at which the collet chuck 21 grips the workpiece W, is hereinafter referred to as a gripping position.

When the ejector rod 22 moves rearward, the drive portion 28a of the servo motor 28 connected to the ejector rod 22 rotates in accordance with the movement of the ejector rod 22. That is, the drive portion 28a rotates by a rotation angle corresponding to a rearward movement amount of the ejector rod 22. When the drive portion 28a rotates, the encoder 28b also rotates in synchronization with the rotation of the drive portion 28a. Accordingly, the encoder 28b detects a rotation angle corresponding to the rearward movement amount of the ejector rod 22.

The control portion 60 stores, in advance, a correspondence between the rotation angle of the encoder and the movement amount of the ejector rod 22 along the axis C2. Accordingly, the control portion 60 receives input of the rotation angle detected by the encoder 28b, and calculates a movement amount by which the ejector rod 22 has moved rearward based on the rotation angle.

Then, the control portion 60 calculates the movement amount by which the ejector rod 22 has moved from the standby position (FIG. 2) to the gripping position (FIG. 3). For example, when the movement amount is L2 as shown in FIG. 3, an insertion length of the workpiece W into the rear spindle 20 is L2.

When the workpiece W is transferred from the front spindle 10 to the rear spindle 20, a long bar-shaped workpiece W is cut at a position of a predetermined length L1 from the front end surface 20A of the rear spindle 20 by a cut-off tool on the gang tool post 40 under control of the control portion 60, in a state in which the rear spindle 20 grips the workpiece W (a state in which the ejector rod 22 is at a retracted position described later). As a result, an end surface W2, located on the side of the front spindle 10, of the workpiece W (an end surface on a side opposite to the insertion-side end surface W1; hereinafter referred to as an ejection-side end surface W2) is formed.

A position of the ejection-side end surface W2 of the workpiece W is a position of the protruding length L1 from the front end surface 20A of the rear spindle 20, and the control portion 60 acquires the protruding length L1 at a machining stage of forming the ejection-side end surface W2. Accordingly, the control portion 60 can calculate a length L of the workpiece W gripped by the rear spindle 20.

Specifically, the control portion 60 can obtain a length L (=L1+L2) of the workpiece W by summing an insertion length L2 into the rear spindle 20 calculated from the rotation angle detected by the encoder 28b and a protruding length L1 from the front end surface 20A of the rear spindle 20 recognized during the machining for forming the ejection-side end surface W2 (=L2+L1).

The rearward movement of the ejector rod 22 from the standby position caused by the supply operation of the workpiece W to the rear spindle 20 indicates that the workpiece W has been inserted into an inside of the rear spindle 20. Accordingly, the control portion 60 can detect the presence of the workpiece W (workpiece present) by the encoder 28b detecting the rotation angle. On the other hand, when the encoder 28b does not detect the rotation angle even though the supply operation of the workpiece W to the rear spindle 20 is performed, the control portion 60 does not detect the presence of the workpiece W (workpiece absent). Accordingly, the workpiece detection device 30 and the automatic lathe 100 can detect the presence or absence of the workpiece W.

As described above, the workpiece detection device 30 and the automatic lathe 100 of the present embodiment detect the presence or absence of the workpiece W and the length of the workpiece W by the workpiece detection device 30 detecting the movement of the ejector rod 22 when the rear spindle 20 receives the workpiece W. Accordingly, the automatic lathe 100 of the present embodiment can detect a workpiece supply state relative to the rear spindle 20 (presence or absence of the workpiece W and the length L of the workpiece W) without detecting torque fluctuation of the servo motor 28.

Therefore, the workpiece detection device 30 and the automatic lathe 100 of the present embodiment can detect a workpiece W supply state relative to the rear spindle 20 (presence or absence of the workpiece W and the length of the workpiece W) with higher accuracy than when torque fluctuation of a servo-equipped actuator is used.

The workpiece detection device 30 and the automatic lathe 100 of the above-described embodiment detect the presence or absence of the workpiece W and the length of the workpiece W as the workpiece W supply state relative to the rear spindle 20. However, the workpiece detection device and the machine tool according to the present invention may detect only the presence or absence of the workpiece W as the workpiece W supply state.

When the automatic lathe 100 performs machining on the workpiece W gripped by the rear spindle 20 using tools provided on the gang tool post 40 and/or the rear tool post 50, the rear spindle 20 rotates the workpiece W about the axis C2, but the ejector rod 22 does not rotate about the axis C2. Accordingly, when the front end surface 22a of the ejector rod 22 is in contact with the insertion-side end surface W1 of the workpiece W as shown in FIG. 3, at least one of the insertion-side end surface W1 of the workpiece W and the front end surface 22a of the ejector rod 22 may be worn due to friction caused by the rotation of the workpiece W.

Accordingly, after the automatic lathe 100 grips the workpiece W at the gripping position (FIG. 3), that is, after the length L of the workpiece W is detected, the control portion 60 controls the servo motor 28 so as to retract the front end surface 22a of the ejector rod 22 along the axis C2 to a position separated from the insertion-side end surface W1 of the workpiece W (see FIG. 4). Note that the position at which the front end surface 22a of the ejector rod 22 is separated from the insertion-side end surface W1 of the workpiece W as shown in FIG. 4 is referred to as a retracted position.

In a state in which the control portion 60 retracts the ejector rod 22 to the retracted position, the front end surface 22a of the ejector rod 22 is not in contact with the insertion-side end surface W1 of the workpiece W. Accordingly, neither the insertion-side end surface W1 of the workpiece W nor the front end surface 22a of the ejector rod 22 is worn by friction even when the automatic lathe 100 rotates the workpiece W about the axis C2.

In the automatic lathe 100 of the present embodiment, the standby position at which the ejector rod 22 stands by before the workpiece W is transferred to the rear spindle 20 is set to a position at which the front end surface 22a coincides with the front end surface 20A of the rear spindle 20. However, the standby position of the ejector rod 22 in the present invention is not limited to the position at which the front end surface 22a coincides with the front end surface 20A of the rear spindle 20.

That is, the standby position of the ejector rod 22 in the present invention may be any known predetermined position that is set such that, when the workpiece W is transferred to the rear spindle 20, the insertion-side end surface W1 of the workpiece W comes into contact with the front end surface 22a of the ejector rod 22 and can move the ejector rod 22 rearward from the standby position.

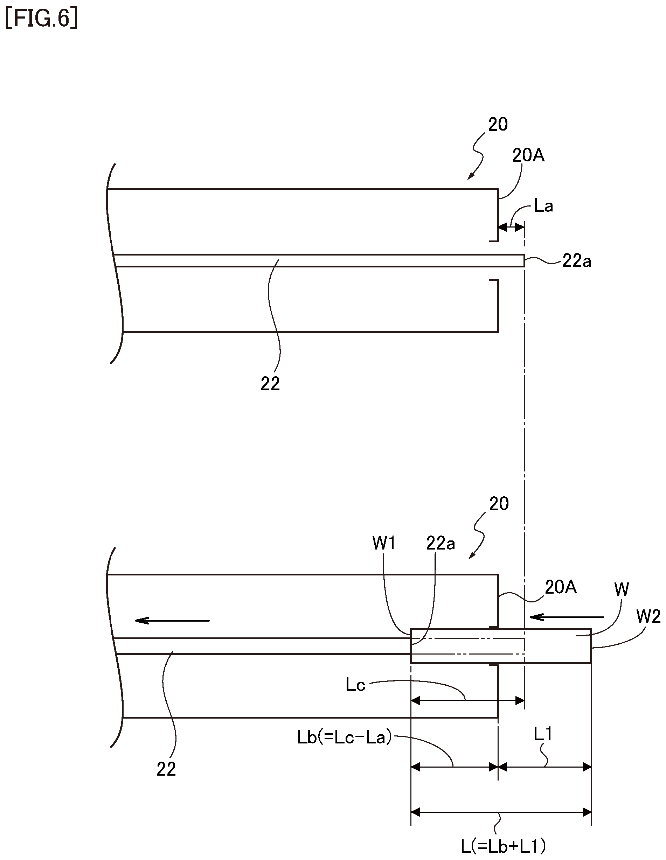

FIG. 6 is a schematic diagram showing an example in which the standby position of the ejector rod 22 is set to a known predetermined position other than the front end surface 20A. When the ejector rod 22 stands by at a position at which the front end surface 22a protrudes by a length La from the front end surface 20A of the rear spindle 20 as shown in an upper part of FIG. 6, transfer of the workpiece W to the rear spindle 20 causes the workpiece W to move the ejector rod 22 standing by at the predetermined position rearward by a length Lc as shown in a lower part of FIG. 6, and the control portion 60 can detect the rearward movement of the ejector rod 22 from the standby position (predetermined position) and the moved length Lc.

The protruding length La of the ejector rod 22 from the front end surface 20A of the rear spindle 20 at the predetermined position is stored in advance in the control portion 60. Accordingly, the control portion 60 can calculate a length Lb of a portion of the workpiece W inserted into the rear spindle 20 by subtracting the protruding length La from the detected length Lc (Lb=Lc-La).

Note that, as the known predetermined position, a position at which the front end surface 22a of the ejector rod 22 is recessed inward from the front end surface 20A of the rear spindle 20 may be applied instead of a position at which the front end surface 22a of the ejector rod 22 protrudes from the front end surface 20A of the rear spindle 20.

Then, the control portion 60 can obtain a length L of the workpiece W gripped by the rear spindle 20 as a sum of the protruding length L1 from the front end surface 20A of the rear spindle 20 and the length Lb of the portion inserted into the rear spindle 20 (L=L1+Lb).

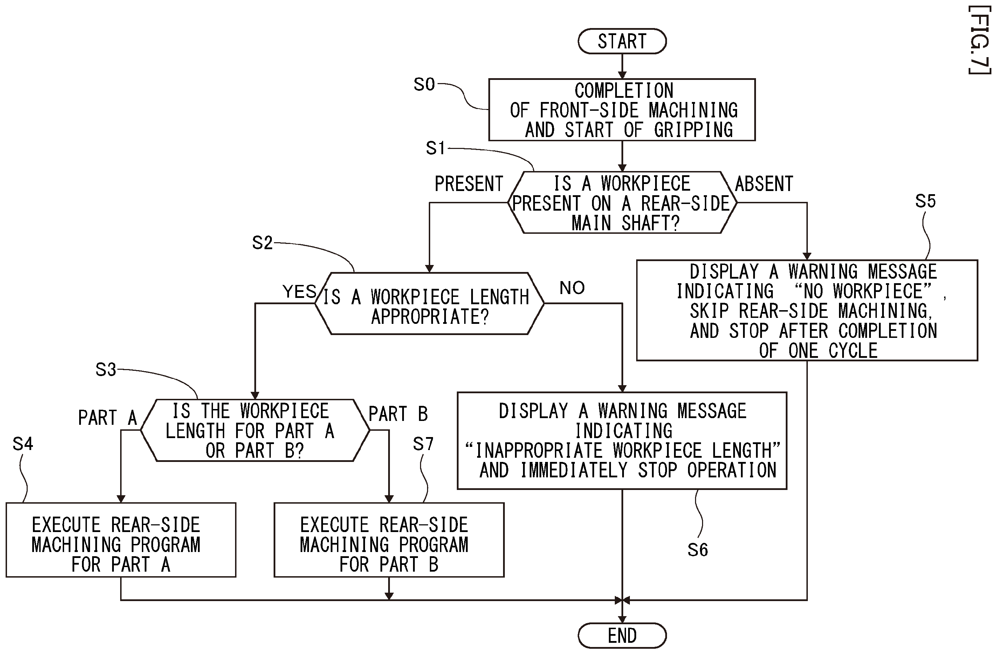

The automatic lathe 100 configured as described above operates, for example, as follows. FIG. 7 is a flowchart showing an example of an operation flow of the automatic lathe 100.

After machining on the workpiece W while gripping the workpiece W by the front spindle 10 is completed, the automatic lathe 100 transfers the workpiece W to the rear spindle 20 (starts re-gripping of the workpiece W to the rear spindle 20) (S0 in FIG. 7).

The workpiece detection device 30 detects the presence or absence of the workpiece W transferred to the rear spindle 20 (S1). When the workpiece detection device 30 does not detect the workpiece W (absent in S1), that is, when the rearward movement of the ejector rod 22 from the standby position is not detected, the control portion 60 operates the notification portion 31. That is, the notification portion 31 displays an alarm indicating "no workpiece" (S5). Then, the control portion 60 skips a machining process in which the workpiece W is gripped by the rear spindle 20, and stops the operation of the automatic lathe 100 after completion of one cycle (S5).

When the workpiece detection device 30 detects the workpiece W (present in S1), that is, when the rearward movement of the ejector rod 22 from the standby position is detected, the control portion 60 obtains the detected length L of the workpiece W, and the control portion 60 determines whether the detected length L of the workpiece W is appropriate (S2).

Here, that the length of the workpiece W is appropriate means that the detected length L of the workpiece W matches a length of the workpiece W specified in a machining program read into the control portion 60 for machining the workpiece W by the automatic lathe 100. On the other hand, that the length of the workpiece W is not appropriate means that the detected length L of the workpiece W does not match the length of the workpiece W specified in the machining program.

When the control portion 60 determines that the detected length L of the workpiece W is not appropriate (NO in S2), the control portion 60 operates the notification portion 31. That is, the notification portion 31 displays an alarm indicating "inappropriate workpiece length" (S6). Then, the control portion 60 immediately stops the machining process of the automatic lathe 100 (S6).

On the other hand, when the control portion 60 determines that the detected length L of the workpiece W is appropriate (YES in S2), the control portion 60 determines, according to the detected length L of the workpiece W, whether the workpiece W is a part A or a part B having a length different from that of the part A (S3).

When the control portion 60 determines that the detected workpiece W is the part A (part A in S3), the control portion 60 changes, via the program changing portion 32, a machining program for the workpiece W gripped by the rear spindle 20 to a machining program for the part A. Then, the control portion 60 causes the automatic lathe 100 to machine the workpiece W in accordance with the machining program for the part A (S4).

On the other hand, when the control portion 60 determines that the detected workpiece W is the part B (part B in S3), the control portion 60 changes, via the program changing portion 32, a machining program for the workpiece W gripped by the rear spindle 20 to a machining program for the part B. Then, the control portion 60 causes the automatic lathe 100 to machine the workpiece W in accordance with the machining program for the part B (S7).

The flowchart shown in FIG. 7 changes the machining program (S3, S4, S7) according to the length L of the workpiece W detected by the workpiece detection device 30. However, the automatic lathe 100 of the present embodiment is not limited to changing the machining program, and may not change the machining program according to the detected length L of the workpiece W. In an automatic lathe 100 that does not change the machining program, when the control portion 60 determines that the detected length L of the workpiece W is appropriate in step S2 (YES in S2), the control portion 60 may control the machining of the workpiece W gripped by the rear spindle 20 in accordance with a machining program set in advance.

In the automatic lathe 100 of the present embodiment, in order to prevent the ejector rod 22 of the workpiece ejecting device 29 from unintentionally moving, the control portion 60 controls the servo motor 28 so as to apply a predetermined excitation holding force to the servo motor 28. By holding the servo motor 28 in a stopped state with the predetermined excitation holding force, the ejector rod 22 is held so as not to move at a predetermined position, and thus, unintended movement can be prevented.

The unintended movement means the movement of the ejector rod 22 not caused by driving the servo motor 28 for the purpose of moving the ejector rod 22, but caused, for example, by vibration generated by the operation of the automatic lathe 100 even though there is no purpose to move the ejector rod 22.

As described above, when the servo motor 28 is held in the stopped state by the excitation holding force, there is a possibility that the rearward movement of the ejector rod 22 is hindered when the ejector rod 22 is pushed by the workpiece W from the standby position to the gripping position.

Accordingly, in the automatic lathe 100, after the ejector rod 22 is moved to the standby position, during an operation in which the workpiece W is inserted into the rear spindle 20, it is preferable that the control portion 60 does not apply the excitation holding force to the servo motor 28, or reduces the excitation holding force applied to the servo motor 28 to an extent that does not hinder the operation in which the workpiece W pushes the ejector rod 22 rearward from the standby position.

Note that a low excitation holding force to an extent that does not hinder the operation in which the workpiece W pushes the ejector rod 22 rearward from the standby position means an excitation holding force such that, even when the excitation holding force is applied to the servo motor 28, the workpiece W can move the ejector rod 22 rearward when the workpiece W pushes the ejector rod 22 rearward.

The workpiece detection device 30 of the present embodiment is configured such that the ejector rod 22 and the servo motor 28 are provided on the rear spindle 20. However, the workpiece detection device according to the present invention is not limited to the configuration in which the ejector rod 22 and the servo motor 28 are provided on the rear spindle 20.

That is, in the workpiece detection device 30 of the present embodiment, the front spindle 10 of the automatic lathe 100 performs a function of supplying the workpiece W. Accordingly, the description has been given with respect to the rear spindle 20 as a side to which the workpiece W is supplied.

However, in a machine tool in which the front spindle 10 receives supply of a workpiece W of a predetermined length that is not a bar-shaped member from the front end surface side, the workpiece detection device 30 may include the ejector rod 22 and the servo motor 28 on the front spindle 10. In this case, the machine tool including the workpiece detection device according to the present invention may not include a rear spindle.

The workpiece detection device 30 of the present embodiment includes the notification portion 31 and the program changing portion 32. However, the workpiece detection device according to the present invention may not include the notification portion 31 and the program changing portion 32.

In the workpiece detection device 30 of the present embodiment, the encoder 28b of the servo motor 28 detects the rotation angle of the drive portion 28a. However, the encoder 28b may be a linear encoder that directly detects a linear movement length of the ejector rod 22 corresponding to the rotation of the drive portion 28a.

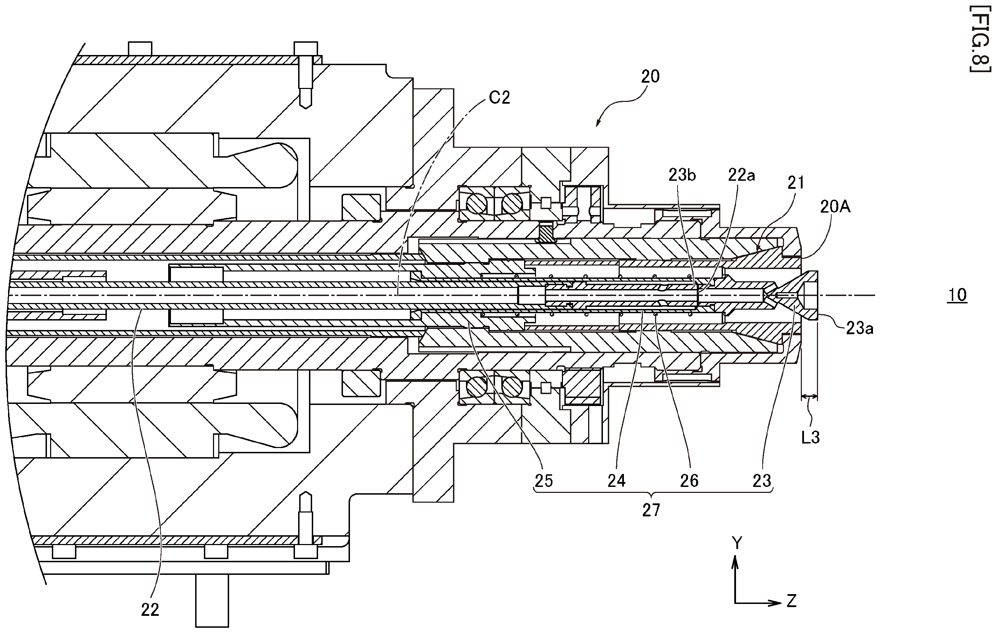

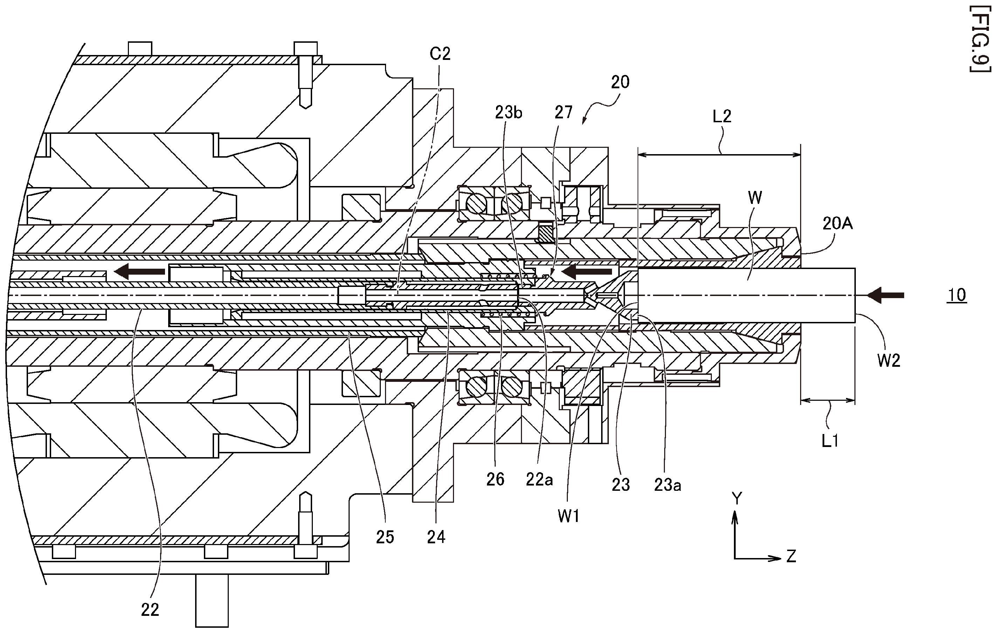

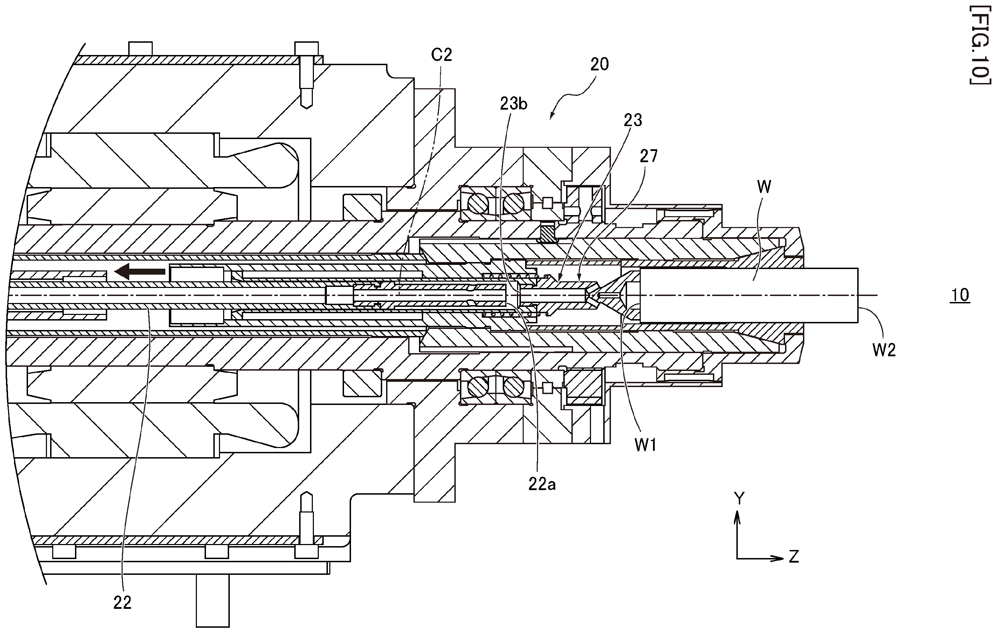

FIGS. 8, 9, and 10 are cross-sectional views taken along the vertical plane including the axis C2 of the rear spindle 20. FIG. 8 shows a state in which a front end surface 23a of a knockout jig 27 is moved to the standby position protruding from the front end surface 20A of the rear spindle 20. FIG. 9 shows a state in which the knockout jig 27 is pushed by the workpiece W and retracted (gripping position). FIG. 10 shows a state in which the front end surface 22a of the ejector rod 22 is moved to a retracted position separated from a rear end surface 23b of a tip receiving portion 23 of the knockout jig 27.

The automatic lathe 100 described above ejects the workpiece W to the outside of the rear spindle 20 by the ejector rod 22 provided inside the rear spindle 20. Therefore, the automatic lathe 100 and the workpiece detection device 30 detect the length L of the workpiece W by the control portion 60 controlling the ejector rod 22.

In contrast, the workpiece detection device 30 shown in FIGS. 8, 9, and 10 adds the knockout jig 27 to the ejector rod 22. The ejector rod 22 is formed in a hollow tubular shape. Accordingly, when a through hole penetrating in the axis C2 direction is formed in the workpiece W gripped by the rear spindle 20, there is a possibility that chips generated by machining enter the inside of the rear spindle 20 through the through hole. The knockout jig 27 is used for preventing the chips from entering the inside of the rear spindle 20 even when the machining for forming the through hole in the workpiece W is performed. The knockout jig 27 corresponds to the movable body in the workpiece detection device according to the present invention together with the ejector rod 22.

As shown in FIGS. 8 to 10, the knockout jig 27 includes a tip receiving portion 23, a tubular portion 24, a base portion 25, and a coil spring 26.

The tip receiving portion 23 is disposed on the front side of the ejector rod 22, and includes a rear end surface 23b in contact with the front end surface 22a of the ejector rod 22. When the ejector rod 22 moves forward (advances toward the front end surface 20A side of the rear spindle 20), the tip receiving portion 23 is pushed by the ejector rod 22 and advances integrally with the ejector rod 22. The tip receiving portion 23 is formed to have an outer diameter slightly smaller than an inner diameter of the collet chuck 21. The tip receiving portion 23 is not formed with a through hole between the rear end surface 23b and the front end surface 23a. Accordingly, the tip receiving portion 23 prevents the chips generated by machining on the workpiece W gripped by the rear spindle 20 from entering the inside thereof.

The tubular portion 24 is fixed to a rear portion of the tip receiving portion 23, and moves integrally with the tip receiving portion 23 along the axis C2. The tubular portion 24 is formed in a tubular shape surrounding a front end portion of the ejector rod 22 from an outer side in a radial direction about the axis C2.

The base portion 25 is fixed to the sleeve 21a of the rear spindle 20, and moves integrally with the sleeve 21a. The base portion 25 is also formed in a tubular shape surrounding the ejector rod 22 from an outer side in a radial direction about the axis C2. The base portion 25 is further formed such that an inner diameter of the tubular shape is larger than an outer diameter of the tubular portion 24, so that the tubular portion 24 can pass through an inner space when the tubular portion 24 moves rearward integrally with the tip receiving portion 23.

The coil spring 26 is disposed between the base portion 25 and the tubular portion 24 along the axis C2, and applies an elastic force so as to separate the tubular portion 24 from the base portion 25. That is, the coil spring 26 biases the tubular portion 24 and the tip receiving portion 23 toward the front end surface 20A side of the rear spindle 20.

In the workpiece detection device 30 in which the knockout jig 27 is provided at the front end of the ejector rod 22 as described above, the control portion 60 controls movement of the ejector rod 22 so as to advance the ejector rod 22 and stop the ejector rod 22 such that the front end surface 23a of the tip receiving portion 23 protrudes by a length L3 from the front end surface 20A of the rear spindle 20 at the standby position shown in FIG. 8. Accordingly, the control portion 60 stores the length L3.

When the workpiece W is supplied from the front spindle 10 in a state in which the ejector rod 22 is at the standby position, the insertion-side end surface W1 of the workpiece W comes into contact with the front end surface 23a of the tip receiving portion 23, and the workpiece W pushes the tip receiving portion 23, the tubular portion 24, the coil spring 26, and the ejector rod 22 rearward, and the workpiece W is inserted into the inside of the rear spindle 20 to a predetermined gripping position as shown in FIG. 9.

At this time, the ejector rod 22 retracts by a length L4 (=L3+L2), which is a sum of the protruding length L3 of the tip receiving portion 23 of the knockout jig 27 at the standby position (see FIG. 8) and the insertion length L2 of the workpiece W when the workpiece W is inserted to the gripping position, and the retracted length L4 is calculated by the control portion 60 of the workpiece detection device 30.

Here, the insertion length L2 of the workpiece W inserted into the inside of the rear spindle 20 from the front end surface 20A is a length obtained by subtracting the protruding length L3 of the tip receiving portion 23 from the detected length L4 (L2=L4-L3).

On the other hand, a position of the ejection-side end surface W2 of the workpiece W at the gripping position (a position of the length L1 from the front end surface 20A) is known in advance by the machining program as described above, and the protruding length L1 is a length of the workpiece W protruding to the outside from the rear spindle 20. Then, a length of the workpiece W is calculated by a sum of the insertion length L2 into the rear spindle 20 and the protruding length L1 from the rear spindle 20 (=L2+L1). Accordingly, the control portion 60 can calculate the length L of the workpiece W (=L4-L3+L1).

Although the knockout jig 27 in the rear spindle 20 rotates integrally with the workpiece W about the axis C2, the ejector rod 22 does not rotate. Therefore, the ejector rod 22 is retracted by the servo motor 28 such that the front end surface 22a of the ejector rod 22 is separated from the rear end surface 23b of the tip receiving portion 23 of the knockout jig 27 as shown in FIG. 10.

At this time, when the tip receiving portion 23 is retracted together with the ejector rod 22, the front end surface 23a of the tip receiving portion 23 is separated from the insertion-side end surface W1 of the workpiece W, and chips enter the inside. However, in the automatic lathe 100 of the present embodiment, the coil spring 26 biases the tip receiving portion 23 forward. Accordingly, even when the ejector rod 22 is retracted, the front end surface 23a of the tip receiving portion 23 does not separate from the insertion-side end surface W1 of the workpiece W, and entry of chips into the inside of the rear spindle 20 is prevented.

### [Cross-reference to Related Application]

The present application is based upon and claims the benefit of priority from Japanese Patent Application No. 2023-118899 filed on July 21, 2023 with the Japan Patent Office, the entire disclosure of which is incorporated in the present specification by reference.

## Claims

1. A workpiece detection device comprising:
a movable body disposed inside a spindle that is configured to grip a workpiece, the movable body being configured to be movable in an axial direction of the spindle to press the workpiece inserted inside the spindle and discharge the workpiece outside the spindle;
a drive mechanism comprising a drive portion that is configured to move the movable body and a detection portion that is configured to detect movement of the drive portion; and
a control portion that is configured to control the drive portion based on a detection result of the detection portion,
wherein the control portion is configured to cause the movable body to be moved to a predetermined position in advance before the workpiece is inserted into the spindle,
the detection portion is configured to detect movement of the movable body when the workpiece is inserted into the spindle and the workpiece moves the movable body, and
the control portion is configured to detect a supply state of the workpiece relative to the spindle based on the movement.

2. The workpiece detection device according to claim 1, wherein the detection portion is configured to detect a movement length of the movable body when the workpiece is inserted into the spindle and the workpiece moves the movable body, and
wherein the control portion is further configured to detect, as the supply state, a length of the workpiece supplied to the spindle based on the movement length.

3. The workpiece detection device according to claim 2, wherein the control portion is configured to
store in advance an insertion length from a front end surface of the spindle to the predetermined position,
acquire a protruding length of the workpiece protruding from the front end surface of the spindle, and
calculate a length of the workpiece based on the insertion length and the protruding length.

4. The workpiece detection device according to claim 1, wherein the drive mechanism is a servo motor.

5. The workpiece detection device according to claim 4, wherein the control portion is configured to reduce an excitation holding force of the servo motor during an operation in which the workpiece is inserted into the spindle.

6. The workpiece detection device according to claim 2, wherein the control portion is configured to stop an operation of the spindle when the workpiece is not detected during an operation in which the workpiece is inserted into the spindle or when the length of the workpiece is determined to be not appropriate.

7. The workpiece detection device according to claim 6, further comprising a notification portion that is configured to notify that the workpiece is not detected or that the length of the workpiece is not appropriate,
wherein the control portion is configured to control the notification portion to notify when the workpiece is not detected during an operation in which the workpiece is inserted into the spindle or when the length of the workpiece is determined to be not appropriate.

8. A machine tool comprising:
a spindle that is configured to receive a workpiece and to grip the workpiece;
a tool that is configured to machine the workpiece gripped by the spindle;
a control device that is configured to control operations of the spindle and the tool; and
the workpiece detection device according to any one of claims 1 to 7,
wherein the control portion of the workpiece detection device is the control device.

9. The machine tool according to claim 8, wherein the control device is configured to change a machining program for controlling operations of the spindle and the tool when the workpiece is not detected during an operation in which the workpiece is inserted into the spindle or when a length of the workpiece is determined to be not appropriate.
